# EUROPEAN PATENT SPECIFICATION

(11) **EP 3 067 561 B1**
(45) Date of publication and mention of the grant of the patent: **01.11.2017**
(21) Application number: 16159698.6
(22) Date of filing: 10.03.2016
(51) Int. Cl.: F04B 39/06, F04B 35/04, F04B 35/06, F04B 39/12

(54) **INFLATOR HAVING AN ENHANCED COOLING EFFECT ON A MOTOR THEREOF**
GENERATOR MIT VERBESSERTER KÜHLWIRKUNG AUF DESSEN MOTOR
GONFLEUR AYANT UN EFFET DE REFROIDISSEMENT AMÉLIORÉ SUR UN MOTEUR ASSOCIÉ

(30) Priority: 11.03.2015 TW 104107788
(43) Date of publication of application: 14.09.2016
(73) Proprietor: Chou, Wen-San, Tainan City (TW)
(72) Inventor: Chou, Wen-San, Tainan City (TW)
(74) Representative: Lang, Christian

(56) References cited:
- EP-A1- 2 353 848
- DE-A1- 10 127 920
- US-A1- 2004 018 098
- US-A1- 2013 228 316

## Description

### (a) Technical Field of the Invention

The present invention relates to an inflator, which has an enhanced cooling effect on a motor thereof, wherein the inflator generally includes a box and a compressor unit installed in the box. The box is designed to allow the air current generated by a cooling fan of the compressor unit to quickly enter the motor's housing to dissipate heat generated therein, so that heat is not easy to accumulate in the motor's housing; therefore, maximum power output of the motor can be achieved, and the performance and service life of the motor can be increased.

### (b) Description of the Prior Art

Air compressors are usually employed to inflate objects such as air cushions or tires. Generally, portable air compressors are manufactured in small size, so that they can be carried easily. Furthermore, a portable air compressor can be powered by a handheld DC power supply or a cigarette lighter socket in a vehicle. Conventionally, a portable air compressor employs a box to accommodate a compressor unit therein, wherein the compressor unit employs a motor to drive a piston body to conduct reciprocating motion in a cylinder to produce compressed air, which can be transferred to an object that needs to be inflated. In operation, heat may be accumulated in the box. Since a motor includes therein a rotor assembly, which contains an armature core formed by an iron core wound with enameled wire, a commutator, and a brush unit, heat is easy to accumulate in the motor's housing. The heat accumulated in the armature core may cause the brush unit to contain more carbon deposits, thus affecting the electrical circuit of the motor. Besides, high temperature resulting from the armature core may reduce the magnetic intensity of the magnets used in the motor. Thus, the performance of the motor can be reduced.

Currently, emergency repair kits, which employ a low-power motor, are used to repair punctured tires. However, in some countries, the Traffic Act stipulates that, when a punctured tire happens to a vehicle on a highway, the driver should repair the punctured tire within a specified period and should immediately drive away after the repair is completed to prevent rearward bump. Under these circumstances, for completing the repair as soon as possible, the motor of the compressor unit of an emergency repair kit should be operated at a higher speed. However, if heat accumulated in the motor's housing cannot be quickly taken away, the performance of the motor will decrease. Even worse, the enameled wire of the armature core will probably be damaged to cause a short circuit, and thus the motor may burn out.

In conventional inflators, a compressor unit and its motor are supported in a box through partitioning walls. However, the box is not structured to assist dissipating heat in the motor. Thus, the box is easy to accumulate the heat generated by the motor, and thus the performance of the motor can be reduced or the motor can be damaged. A prior art compressor is known from EP2353848 having the features of the preamble of claim 1 except that there is no downstream through hole on the housing.

### SUMMARY OF THE INVENTION

One object of the present invention is to provide an inflator, which generally comprises a box and a compressor unit installed in the box. The box is composed of a cover and a base. The compressor unit includes a motor, which can be firmly supported in the box by upper and lower airflow-guiding members which are respectively provided at the cover and the base. The motor can rotate a cooling fan for generating an air current, which can be guided by the upper and lower airflow-guiding members to quickly enter the motor's housing via two opposite openings of the motor's housing and then to flow out of the motor's housing via downstream through holes of the motor's housing, thus taking away the heat generated by the rotor assembly in the motor. Thus, heat is not easy to accumulate in the motor, so that the performance and service life of the motor can be increased.

Other objects, advantages, and novel features of the present invention will become more apparent from the following detailed description when taken in conjunction with the accompanying drawings.

### BRIEF DESCRIPTION OF THE DRAWINGS

FIG 1 shows an exploded view of an inflator according to one embodiment of the present invention, wherein the inflator generally includes a box being composed of a cover and a base, and a compressor unit.
FIG 2 shows a 3-dimensionally sectional view of the inflator.
FIG 3 shows a 3-dimensional view of the base of the box.
FIG 4 shows a top view of the inflator, wherein the location of the compressor unit is manifested.
FIG 5 shows a sectional view of the inflator
FIG 6 shows a sectional view of the box.
FIG 7 shows a 3-dimensionally sectional view of the inflator, wherein the air current for dissipating heat is manifested.

### DETAILED DESCRIPTION OF THE PREFERRED EMBODIMENTS

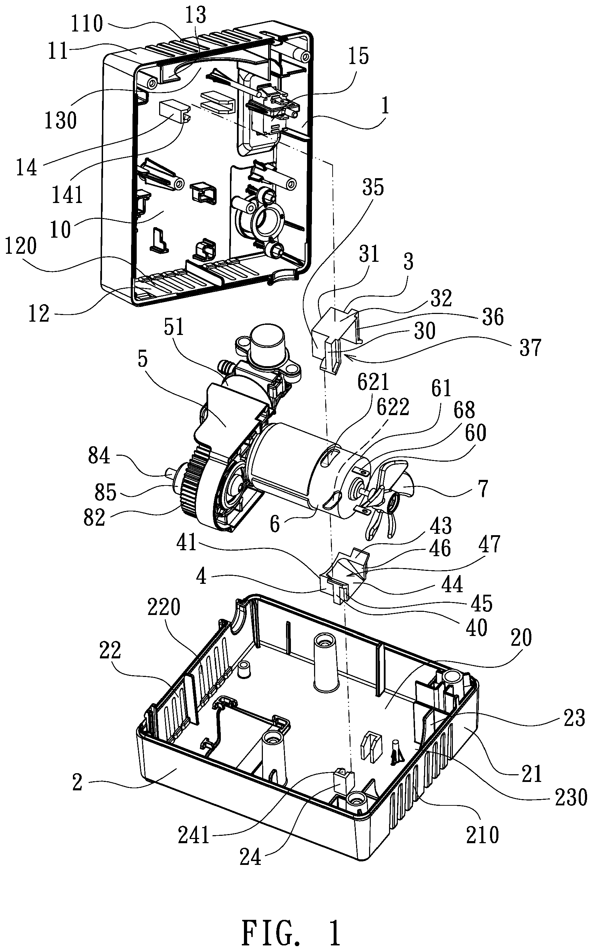

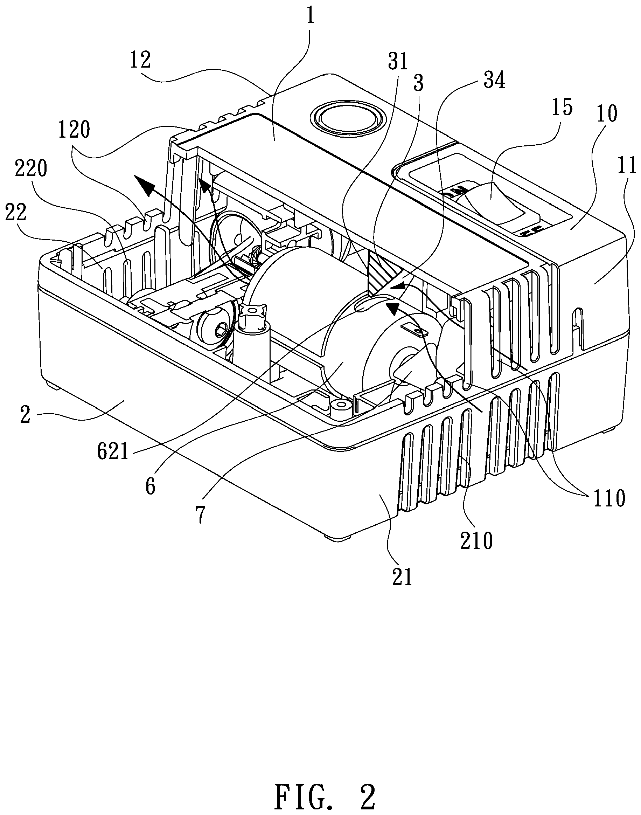

Referring first to FIGS. 1 and 2, an inflator according to one embodiment of the present invention is shown, which generally includes a box and a compressor unit installed in the box, wherein the box is composed of a cover 1 and a base 2.

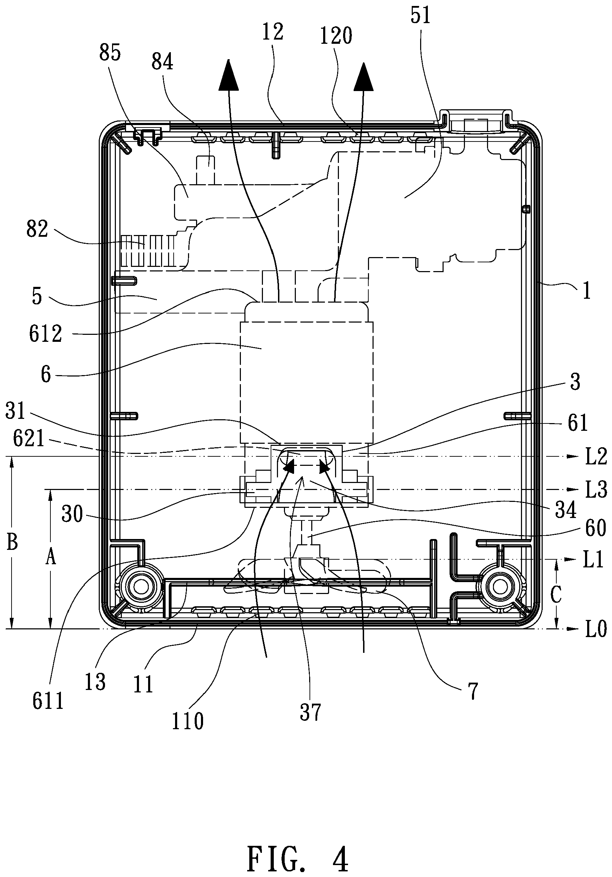

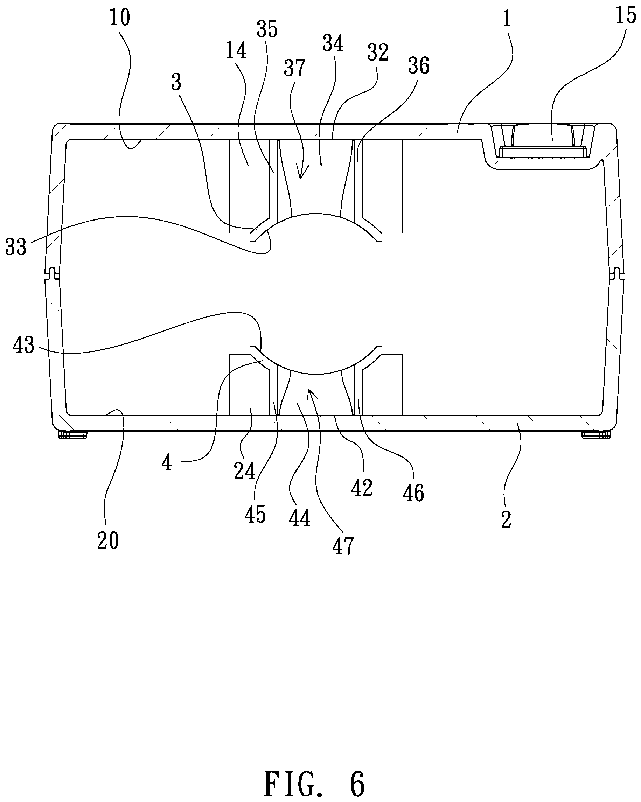

As shown in FIG 1, the cover 1, which has a rectangular board 10, a front wall 11 and a rear wall 12 opposite to the front wall 11, wherein the rectangular board 10 is installed with a switch 15 for starting or stopping the compressor unit. The front wall 11 of the cover 1 defines multiple first slits 110 to serve as an air entrance port, while the rear wall 12 of the cover 1 defines multiple second slits 120 to serve as an air exit port. The rectangular board 10 is provided with two opposite, upper fixing columns 14, each of which defines a channel 141, for engaging with an upper airflow-guiding member 3, which has an intercepting wall 31 of a predetermined height, two lateral walls 35, 36, a base plate 32, and a curved portion 33 (see also FIGS. 4 and 6). The two lateral walls 35, 36 respectively extend from two opposite sides of the intercepting wall 31, towards the front wall 11 of the cover 1. The intercepting wall 31 is farther to the front wall 11 of the cover 1 than its adjacent lateral walls 35, 36. The base plate 32 is formed between one end of the intercepting wall 31 and the lateral walls 35, 36. The curved portion 33 is formed opposite to the base plate 32, conforming to the curvature of the housing 61 of a motor 6 of the compressor unit. The upper airflow-guiding member 3 is formed with two opposite ribs 30, which respectively extend from the two lateral sides 35, 36 and are substantially perpendicular to the two lateral sides 35, 36. The two opposite ribs 30 can engage in the channels 141 of the two upper fixing columns 14 and can support the curved portion 33, so that the upper airflow-guiding member 3 can be fixed onto the cover 1, and the curved portion 33 thereof can be used to support the motor's housing 61 of the compressor unit. The upper airflow-guiding member 3 is engaged with the upper fixing columns 14 such that the base plate 32 thereof is brought in contact with the rectangular board 10 of the cover 1. An upper air guiding channel 37 is defined between the intercepting wall 31, the two lateral walls 35, 36, and the base plate 32 thereof. An upper slant surface 34, which is formed between the intercepting wall 31 and the base plate 32, faces towards the front wall 11 of the cover 1 for guiding the air current generated by a cooling fan 7 of the compressor unit to enter the motor's housing 61 more smoothly. Furthermore, the cover 1 is provided with an upper wall 13 which has a concave bottom 130. The upper wall 13 is located behind and parallel to the front wall 11 of the cover 1.

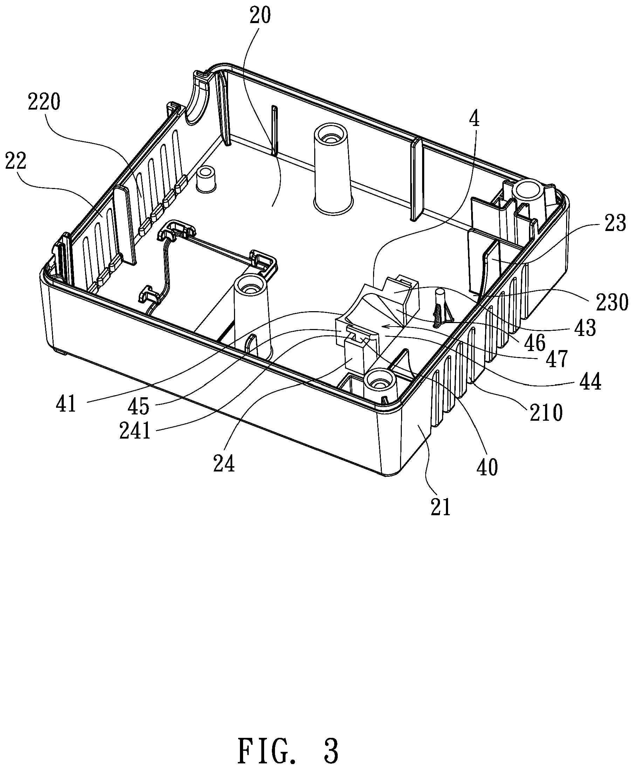

Referring to FIGS. 1 and 3, the base 2 has a rectangular board 20, a front wall 21 and a rear wall 22 opposite to the front wall 21. When the base 2 is combined with the cover 1 to form the box, the front wall 21 of the base 2 is aligned with the front wall 11 of the cover1, while the rear wall 22 of the base 2 is aligned with the rear wall 12 of the cover 1.The front wall 21 of the base 2 defines multiple first slits 210 to serve as an air entrance port, while the rear wall 22 of the base 2 defines multiple second slits 220 to serve as an air exit port. The rectangular board 20 is provided with two opposite, lower fixing columns 24, each of which defines a channel 241, for engaging with a lower airflow-guiding member 4, which is similar to the upper airflow-guiding member 3. The lower airflow-guiding member 4 has an intercepting wall 41 of a predetermined height, two lateral walls 45, 46, a base plate 42, and a curved portion 43 (see also FIG 6). The two lateral walls 45, 46 respectively extend from two opposite sides of the intercepting wall 41, towards the front wall 21 of the base 2. The intercepting wall 41 is farther to the front wall 21 of the base 2 than its adjacent lateral walls 45,46. The base plate 42 is formed between one end of the intercepting wall 41 and the lateral walls 45, 46. The curved portion 43 is formed opposite to the base plate 42, conforming to the curvature of the motor's housing 61 of the compressor unit. The lower airflow-guiding member 4 is formed with two opposite ribs 40, which respectively extend from the two lateral sides 45, 46 and are substantially perpendicular to the two lateral sides 45, 46. The two opposite ribs 40 can engage in the channels 241 of the two lower fixing columns 24 and support the curved portion 43, so that the lower airflow-guiding member 4 can be fixed onto the base 2, and the curved portion 43 thereof can be used to support the motor's housing 61 of the compressor unit. The lower airflow-guiding member 4 is engaged with the lower fixing columns 24 such that the base plate 42 of the lower airflow-guiding member 4 is brought in contact with the rectangular board 20 of the base 2. A lower air guiding channel 47 is defined between the intercepting wall 41, the two lateral walls 45, 46 of the lower airflow-guiding member 4, and the base plate 42 of the lower airflow-guiding member 4. A lower slant surface 44, which is formed between the intercepting wall 41 and the base plate 42, faces towards the front wall 21 of the base 2 for guiding the air current generated by the cooling fan 7 to enter the motor's housing 61 more smoothly. Furthermore, the base 2 is provided with a lower wall 23 which has a concave top 230. The lower wall 23 is located behind and parallel to the front wall 21 of the base 2.

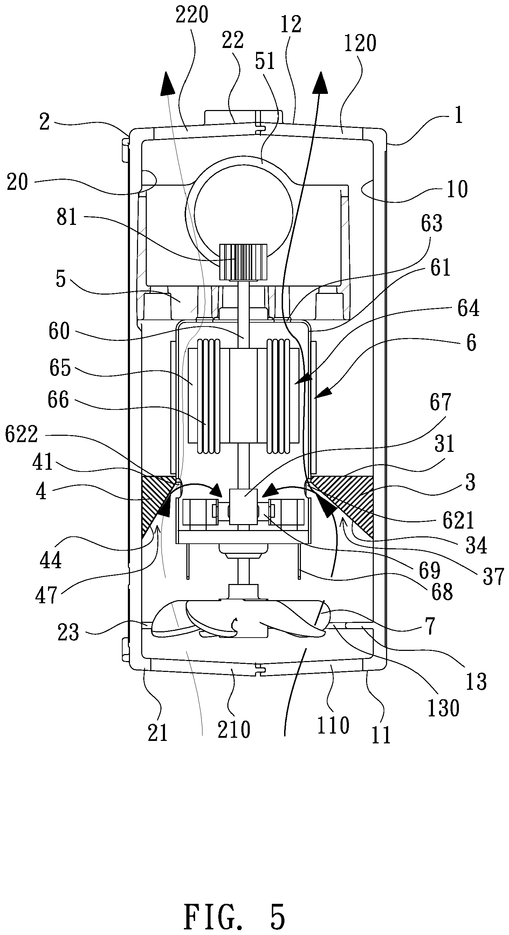

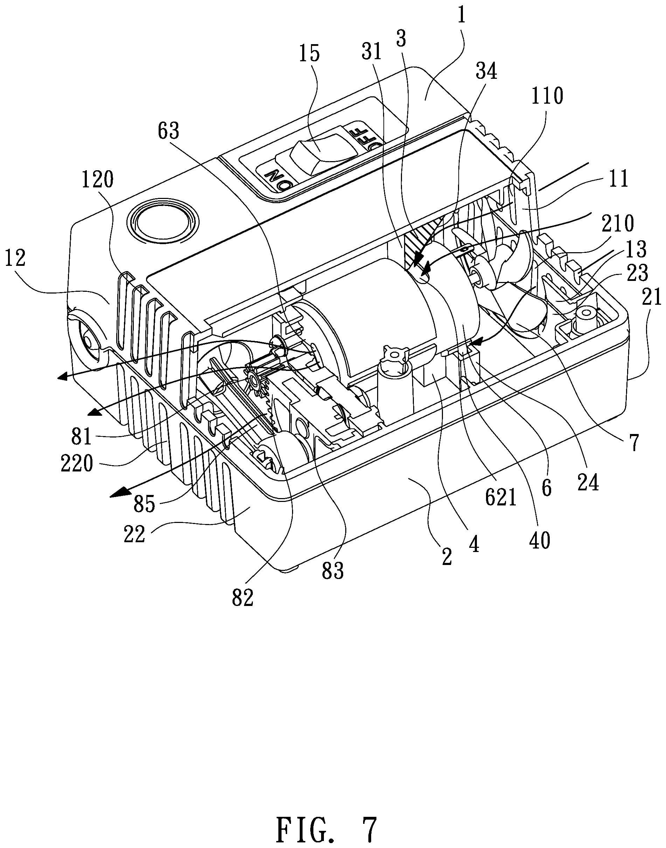

Although the compressor unit is not the main feature of the present invention, the basic elements of the compressor unit will be briefly described below for a better understanding of the technical contents of the present invention. Referring to FIGS. 1 through 5, the compressor unit, which is installed between the cover 1 and the base 2, generally includes a main frame 5, a cylinder 51 fitted with a piston body 85 and provided at the main frame 5, a transmission mechanism, the cooling fan 7, and the motor 6 which can drive the transmission mechanism to have the piston body 85 conduct reciprocating motion in the cylinder 51. The transmission mechanism includes a pinion 81, a gear 82 engaged with the pinion 81, and a counterweight 83 (see FIG 7). In the motor's housing 61, there is provided a rotor assembly 64 (see FIG 5), which includes a rotating shaft 60, an iron core 65 wound with enameled wire 66, a commutator 67, electrical terminals 68, and a brush unit 69. One end of the rotating shaft 60 is fitted with the cooling fan 7, and an opposite end of the rotating shaft 60 is fitted with the pinion 81. The motor's housing 61 defines two opposite openings 621, 622 at its circumferential wall, and a plurality of downstream through holes 63 (see also FIG 5). The counterweight 83 is attached to the gear 82 and provided with a crankshaft and a crankpin 84, wherein the crankshaft is inserted through the gear 82 and rotatably connected to the main frame 5, while the crankpin 84 is pivotally connected to one end of the piston body 85. When the compressor unit is installed between the cover 1 and the base 2, the motor's housing 61 can be located between the upper and lower airflow-guiding members 3, 4 (see also FIGS. 5 and 6), wherein the curved portions 33, 43 of the upper and lower airflow-guiding members 3, 4 can support the motor's housing 61 properly, so that the motor 6 can be prevented from being loose, tilting or tipping over. The motor 6 can be started to rotate the pinion 81, which in turn can rotate the gear 82 to have the piston body 85 conduct reciprocating motion in the cylinder 51.

Referring to FIG 4, the motor 6 is held between the upper and lower airflow-guiding members 3, 4 of the cover 1 and the base 2, wherein the outer surface of the front wall 11 or the front wall 21 is defined as a first reference line (L0). The cooling fan 7 is fitted at one end of the rotating shaft 16, near the front end 611 of the motor's housing 61. The rear end 612 of the motor's housing 61 is distal from the cooling fan 7. The back of the cooling fan 7 is defined as a second reference line (L1). The two opposite opening 621, 622 are located at one portion of the circumferential wall of the housing 61, near the front end 611 of the motor's housing 61. A central axis of the opening 621 or the opening 622, which is parallel to the front walls 11,21, is defined as a third reference line (L2). A central axis of the two upper fixing columns 14 or the two lower fixing columns 24, which is parallel to the front walls 11,21, is defined as a fourth reference line (L3). As shown, the distance between the first reference line (L0) and the fourth reference line (L3) is labeled with dimension (A); the distance between the first reference line (L0) and the third reference line (L2) is labeled with dimension (B); the distance between the first reference line (L0) and the second reference line (L1) is labeled with dimension (C); wherein the relationship of (B >A>C) is fulfilled. When the cooling fan 7 is rotated by the motor 6, outside air can be drawn into the box. In this embodiment, the air entrance port, which is formed as the first slits 110,210, is provided at the front walls 11,21. Of course, the air entrance port can be provided at other locations of the box as well, provided that it is located in front of the cooling fan 7, and between the first reference line (L0) and the second reference line (L1).

FIGS. 4, 5 and 7 schematically show the air path of the inflator. As shown, when the cooling fan 7 is rotated by the motor 6, outside air can be drawn into the box to form an air current via the first slits 110, 210 of the front walls 11, 21 and the round opening, which is defined by the two concave parts 130,230 of the upper and lower walls 13,23. The upper and lower airflow-guiding members 3,4 are disposed in contact with the motor's housing 61, wherein the two opposite openings 621, 622 are respectively within the upper and lower air guiding channels 37, 47 and respectively in front of the slant surfaces 34, 44 of the airflow-guiding members 3, 4, so that the air current can be guided by the slant surfaces 34,44 to pass through the openings 621, 622 to enter the motor's housing 61 more easily, and then can flow out of the motor's housing 61 via the downstream through holes 63 thereof, and finally can flow out of the box via the second slits 120, 220 of the rear walls 12, 22. Therefore, the heat generated from the friction between the brush unit 69 and the commutator 67, and the heat generated from the electrical circulation in the enameled wire 66 can be taken away with the air current (see FIG 5).

As a summary, the inflator of the present invention can solve the poor heat dissipation in conventional inflators. The inflator of the present invention is featured in that the cover 1 and the base 2 are respectively provided with the upper and lower airflow-guiding members 3, 4, which can quickly guide the air current generated by the cooling fan 7 to enter the motor's housing 61 via the two opposite openings 621, 622 of the housing 61 and then flow out of the motor's housing 61 via the downstream through holes 63, thus taking away the heat generated by the rotor assembly 64 in the motor 6. Thus, heat is not easy to accumulate in the motor's housing, so that maximum power output of the motor can be achieved, and the performance and service life of the motor can be increased. In addition, the upper and lower airflow-guiding members 3, 4 can be used to firmly support the motor's housing between the cover 1 and base 2.

## Claims

1. In an inflator including a box composed of a cover (1) and a base (2), and a compressor unit installed in the box, wherein the cover (1) has a board (10), a front wall (11) and a rear wall (12) opposite to the front wall (10), and the base (2) has a board (20), a front wall (21) aligned with the front wall (11) of the cover (1), and a rear wall (22) aligned with the rear wall (12) of the cover (1), the front walls (11)(21) of the cover and the base defining multiple first slits (110)(210) to serve as an air entrance port, the rear walls (12)(22) of the cover and the base defining multiple second slits (120)(220) to serve as an air exit port, the compressor unit including a motor (6) having a rotating shaft (60), one end of which is provided with a cooling fan (7), behind the front walls (11)(21), for drawing outside air into the box to form an air current via the first slits (110)(210), the motor (6) defining two opposite openings (621)(622) and at least one downstream through hole (63) on its housing (61); **characterized in that** the cover (1) is provided at its board (10) with two opposite, upper fixing columns (14) capable of engaging with an upper airflow-guiding member (3), while the base (2) is provided at its board (20) with two opposite, lower fixing columns (24), corresponding to the two upper fixing columns (14), capable of engaging with a lower airflow-guiding member (4), whereby the upper and lower airflow-guiding members (3)(4) firmly supports the motor's housing (61) of the compressor unit, and furthermore, the air current generated by the cooling fan (7) can be guided by the upper and lower airflow-guiding members (3)(4) to quickly enter the motor's housing (61) via the two opposite openings (621)(622) and to flow out of the motor's housing (61) via the downstream through hole (63), so that heat is not easy to accumulate in the motor (6), and thus maximum power output of the motor (6) can be achieved, and the performance and service life of the motor (6) can be increased.

2. The inflator of claim 1, wherein the upper airflow-guiding member (3) has an intercepting wall (31), two lateral walls (35, 36) extending from two opposite sides of the intercepting wall (31) thereof towards the front wall (11) of the cover (1), a base plate (32) formed between one end of the intercepting wall (31) and the lateral walls (35, 36), and a curved portion (33) formed opposite to the base plate (32), an upper slant surface (34) being formed between the intercepting wall (31) and the base plate (32) of the upper airflow-guiding member (3) and facing towards the front wall (11) of the cover (1), the upper airflow-guiding member (3) capable of engaging with the upper fixing columns (14) such that the base plate (32) of the upper airflow-guiding member (3) is brought in contact with the board (10) of the cover (1), and an upper air guiding channel (37) is defined between the intercepting wall (31), the two lateral walls (35, 36) of the upper airflow-guiding member (3), and the base plate (32) of the upper airflow-guiding member (3); the lower airflow-guiding member (4) has an intercepting wall (41), two lateral walls (45,46) extending from two opposite sides of the intercepting wall (41) thereof towards the front wall (21) of the base (2), a base plate (42) formed between one end of the intercepting wall (41) and the lateral walls (45,46) of the lower airflow-guiding member (4), and a curved portion (43) formed opposite to the base plate (42) thereof, a lower slant surface (44) being formed between the intercepting wall (41) and the base plate (42) of the lower airflow-guiding member (4) and facing towards the front wall (21) of the base (2), the lower airflow-guiding member (4) capable of engaging with the lower fixing columns (24) such that the base plate (42) of the lower airflow-guiding member (4) is brought in contact with the board (20) of the base (2), and a lower air guiding channel (47) is defined between the intercepting wall (41), the two lateral walls (45,46) of the lower airflow-guiding member (4), and the base plate (42) of the lower airflow-guiding member (4); wherein the two openings (621)(622) of the motor (6) are respectively located within the upper and lower air guiding channels (37)(47), whereby the upper and lower air guiding channels (37)(47) can guide the air current generated by the cooling fan (7) to quickly enter the motor's housing (61) via the two openings (621)(622), wherein the upper and lower slant surfaces (34)(44) of the upper and lower airflow-guiding members (3)(4) allows the air current to pass the two openings (621)(622) more easily.

3. The inflator of claim 2, wherein each of the two upper fixing columns (14) defines a channel (141), and the upper airflow-guiding member (3) is formed with two opposite ribs (30) capable of engaging in the channels (141) of the two upper fixing columns (14) and supporting the curved portion (33) of the upper airflow-guiding member (3) for allowing the upper airflow-guiding member (3) to be fixed onto the cover (1); each of the two lower fixing columns (24) defines a channel (241), and the lower airflow-guiding member (4) is formed with two opposite ribs (40) capable of engaging in the channels (241) of the two lower fixing columns (24) and supporting the curved portion (43) of the lower airflow-guiding member (4) for allowing the lower airflow-guiding member (4) to be fixed onto the base (2); whereby the motor's housing (61) can be firmly supported by the curved portions (33)(43) of the upper and lower airflow-guiding member (3)(4).

4. The inflator of claim 1, wherein the cover (1) is provided with an upper wall (13) which has a concave bottom and is located behind and parallel to the front wall (11) of the cover (1); the base (2) is provided with a lower wall (23) which has a concave top and is located behind and parallel to the front wall (21) of the base (2).

5. The inflator of claim 1, wherein the two upper fixing columns (14) are arranged along a line which is parallel to the front wall (11) of the cover (1), the upper airflow-guiding member (3) being engaged with the two upper fixing columns (14) such that the intercepting wall (31) of the upper airflow-guiding member (3) is farther to the front wall (11) of the cover (1) than its adjacent lateral walls (35, 36) and faces towards the front wall (11) of the cover (1); the two lower fixing columns (24) are arranged along a line which is parallel to the front wall (21) of the base (2), the lower airflow-guiding member (4) being engaged with the two lower fixing columns (24) such that the intercepting wall (41) of the lower airflow-guiding member (4) is farther to the front wall (21) of the base (2) than its adjacent lateral walls (45,46) and faces towards the front wall (21) of the base (2); whereby outside air can be drawn into the box via the first slits (110)(210) and then be guided by the upper and lower airflow-guiding members (3)(4) to enter the motor's housing (61) via the two openings (621)(622), and finally can go out of the box via the second slits (120)(220), thus taking away the heat generated in the motor (6).

6. The inflator of claim 5, wherein the distance between the line, along which the two upper fixing columns (14) are arranged, and the front wall (11) of the cover (1) is A; the distance between one of the two openings of the motor (6), which corresponds to the upper airflow-guiding member (3), and the front wall (11) of the cover (1) is B; the distance between a back of the cooling fan (7) and the front wall (11) of the cover (1) is C; wherein the relationship B>A>C is fulfilled.

## Patentansprüche

1. Generator mit einem Behälter, der sich aus einem Deckel (1) und einer Basis (2) zusammensetzt, und einer in dem Behälter installierten Kompressoreinheit, wobei der Deckel (1) eine Platte (10), eine Vorderwand (11) und eine der Vorderwand (11) gegenüberliegende Rückwand (12) hat, wobei die Basis (2) eine Platte (20), eine Vorderwand (21), die entsprechend der Vorderwand (11) des Deckels (1) ausgerichtet ist, und eine Rückwand (22) hat, die entsprechend der Rückwand (12) des Deckels (1) ausgerichtet ist, wobei die Vorderwände (11)(21) des Deckels und der Basis mit mehreren ersten Schlitzen (110)(210) ausgebildet sind, die als eine Lufteintrittsöffnung dienen, wobei die Rückwände (12)(22) des Deckels und der Basis mit mehreren zweiten Schlitzen (120)(220) ausgebildet sind, die als eine Luftaustrittsöffnung dienen, wobei die Kompressoreinheit einen Motor (6) beinhaltet, der eine Drehachse (60) aufweist, von der ein Ende hinter den Vorderwänden (11)(21) mit einem Kühlerlüfter (7) versehen ist, um Luft von außen über die ersten Schlitze (110)(210) in den Behälter zu ziehen, um einen Luftstrom zu erzeugen, wobei der Motor (6) an seinem Gehäuse (61) zwei gegenüberliegende Öffnungen (621)(622) und wenigstens ein Abwärtsstromdurchgangsloch (63) aufweist,
**dadurch gekennzeichnet, dass**
der Deckel (1) an seiner Platte (10) zwei gegenüberliegende, obere Betestigungssäulen (14) aufweist, die mit einem oberen Luftstromführungselement (3) in Eingriff bringbar sind, wobei die Basis (2) an ihrer Platte (20) zwei gegenüberliegende, untere Befestigungssäulen (24) aufweist, die mit den beiden oberen Befestigungssäulen (14) korrespondieren und mit einem unteren Luftstromführungselement (4) in Eingriff bringbar sind, wobei das obere und das untere Luftstromführungselement (3)(4) das Motorgehäuse (61) der Kompressoreinheit sicher abstützen, wobei der durch den Kühlerlüfter (7) erzeugte Luftstrom darüber hinaus durch das obere und das untere Luftstromführungselement (3)(4) geführt werden kann, um durch die zwei gegenüberliegenden Öffnungen (621)(622) schnell in das Motorgehäuse (61) einzutreten und über das Abwärtsstromdurchgangsloch (63) aus dem Motorgehäuse (61) herauszuströmen, sodass sich die Wärme nicht leicht in dem Motor (6) aufstauen kann und somit die maximale Leistungsabgabe für den Motor (6) erreicht werden kann und die Leistung und Lebensdauer des Motors (6) erhöht werden können.

2. Generator nach Anspruch 1, bei welchem das obere Luftstromführungselement (3) eine Abfangwand (31), zwei Seitenwände (35, 36), die sich von zwei entgegengesetzten Seiten der Abfangwand (31) desselben in Richtung der Vorderwand (11) des Deckels (1) erstrecken, eine Basisplatte (32), die zwischen einem Ende der Abfangwand (31) und den Seitenwänden (35, 36) ausgebildet ist, und einen gekrümmten Abschnitt (33) aufweist der gegenüber von der Basisplatte (32) ausgebildet ist, wobei eine obere Schrägfläche (34) zwischen der Abfangwand (31) und der Basisplatte (32) des oberen Luftstromführungselements (3) ausgebildet ist und in Richtung der Vorderwand (11) des Deckels (1) weist, wobei das obere Luftstromführungselement (3) mit den oberen Befestigungssäulen (14) in Eingriff bringbar ist, sodass die Basisplatte (32) des oberen Luftstromführungselements (3) mit der Platte (10) des Deckels (1) in Kontakt gebracht ist, und wobei ein oberer Luftführungskanal (37) zwischen der Abfangwand (31), den zwei Seitenwänden (35, 36) des oberen Luftstromführungselements (3) und der Basisplatte (32) des oberen Luftstromführungselements (3) definiert ist, wobei das untere Luftstromführungselement (4) eine Abfangwand (41), zwei Seitenwände (45, 46), die sich von zwei entgegengesetzten Seiten der Abtangwand (41) desselben in Richtung der Vorderwand (21) der Basis (2) erstrecken, eine Basisplatte (42), die zwischen einem Ende der Abfangwand (41) und den Seitenwänden (45, 46) des unteren Luftstromführungselements (4) ausgebildet ist, und einen gekrümmten Abschnitt (43) aufweist, der gegenüber von der Basisplatte (42) desselben ausgebildet ist, wobei eine untere Schrägfläche (44) zwischen der Abfangwand (41) und der Basisplatte (42) des unteren Luftstromführungselements (4) ausgebildet ist und in Richtung der Vorderwand (21) der Basis (2) weist, wobei das untere Luftstromführungselement (4) mit den unteren Befestigungsäulen (24) in Eingriff bringbar ist, sodass die Basisplatte (42) des unteren Luftstromführungselements (4) mit der Platte (20) der Basis (2) in Kontakt gebracht ist, und wobei ein unterer Luftführungskanal (47) zwischen der Abfangwand (41), den beiden Seitenwänden (45, 46) des unteren Luftstromführungselements (4) und der Basisplatte (42) des unteren Luftstromführungselements (4) definiert ist, wobei die beiden Öffnungen (621)(622) des Motors (6) entsprechend innerhalb des oberen und des unteren Luftführungskanals (37)(47) angeordnet sind, wobei der obere und der untere Luftführungskanal (37)(47) den durch den Kühlerlüfter (7) erzeugten Luftstrom führen können, damit dieser durch die beiden Öffnungen (621)(622) schnell in das Motorgehäuse (61) eintritt, wobei die obere und die untere Schrägfläche (34)(44) des oberen und des unteren Luftstromführungselements (3)(4) ermöglichen, dass der Luftstrom leichter durch die beiden Öffnungen (621)(622) hindurchströmen kann.

3. Generator nach Anspruch 2, bei welchem jede der beiden oberen Befestigungssäulen (14) einen Kanal (141) aufweist, wobei das obere Luftstromführungselement (3) mit zwei gegenüberliegenden Rippen (30) ausgebildet ist, die in die Kanäle (141) der beiden oberen Befestigungssäulen (14) einrasten und den gekrümmten Abschnitt (33) des oberen Luftstromführungselements (3) abstützen können, um zu ermöglichen, dass das obere Luftstromführungselement (3) an dem Deckel (1) fixiert wird, wobei jede der beiden unteren Befestigungssäulen (24) einen Kanal (241) aufweist, wobei das untere Luftstromführungselement (4) mit zwei gegenüberliegenden Rippen (40) ausgebildet ist, die in die Kanäle (241) der beiden unteren Befestigungssäulen (24) einrasten und den gekrümmten Abschnitt (43) des unteren Luftstromführungselements (4) abstützen können, um zu ermöglichen, dass das untere Luftstromführungselement (4) an der Basis (2) fixiert wird, wobei das Motorgehäuse (61) durch die gekrümmten Abschnitte (33)(43) des oberen und des unteren Luftstromführungselements (3)(4) sicher gehalten werden kann.

4. Generator nach Anspruch 1, bei welchem der Deckel (1) mit einer oberen Wand (13) versehen ist, die einen konkaven Boden hat und hinter der und parallel zur Vorderwand (11) des Deckels (1) angeordnet ist, wobei die Basis (2) mit einer unteren Wand (23) ausgebildet ist, die eine konkave Oberseite hat und hinter der und parallel zur Vorderwand (21) der Basis (2) angeordnet ist.

5. Generator nach Anspruch 1, bei welchem die zwei oberen Befestigungssäulen (14) entlang einer Linie angeordnet sind, die parallel zur Vorderwand (11) des Deckels (1) ist, wobei das obere Luftstromführungselement (3) mit den beiden oberen Befestigungssäulen (14) in Eingriff steht, sodass die Abfangwand (31) des oberen Luftstromführungselements (3) weiter weg von der Vorderwand (11) des Deckels (1) ist als die daran angrenzenden Seitenwände (35, 36) und der Vorderwand (11) des Deckels (1) zugewandt ist, wobei die zwei unteren Befestigungssäulen (24) entlang einer Linie angeordnet sind, die parallel zur Vorderwand (21) der Basis (2) ist, wobei das untere Luftstromführungselement (4) mit den beiden unteren Befestigungssäulen (24) in Eingriff steht, sodass die Abfangwand (41) des unteren Luftstromführungselements (4) weiter weg von der Vorderwand (21) der Basis (2) ist als die daran angrenzenden Seitenwände (45, 46) und der Vorderwand (21) der Basis (2) zugewandt ist, wobei Luft von außen durch die ersten Schlitze (110)(210) in den Behälter gesaugt werden kann und dann durch das obere und das untere Luftstromführungselement (3)(4) so geführt werden kann, um durch die zwei Öffnungen (621)(622) in das Motorgehäuse (61) einzutreten und schließlich durch die zweiten Schlitze (120)(220) aus dem Behälter austreten kann, um dadurch die in dem Motor (6) erzeugte Warme abzufuhren.

6. Generator nach Anspruch 5, bei welchem der Abstand zwischen der Linie, entlang welcher die beiden oberen Befestigungssäulen (14) angeordnet sind, und der Vorderwand (11) des Deckels (1) A ist, wobei der Abstand zwischen einer der beiden Öffnungen des Motors (6), die mit dem oberen Luftstromführungselement (3) korrespondiert, und der Vorderwand (11) des Deckels (1) B ist, wobei der Abstand zwischen einer Rückseite des Kühlerlüfters (7) und der Vorderwand (11) des Deckels (1) C ist, wobei das Verhältnis B >A>C erfüllt ist.

## Revendications

1. Gonfleur incluant un boîtier composé d'un couvercle (1) et d'une base (2), et une unité à compresseur installée dans le boîtier, dans lequel le couvercle (1) possède un panneau (10), une paroi avant (11) et une paroi arrière (12) opposée à la paroi avant (10), et la base (2) possède un panneau (20), une paroi avant (21) alignée avec la paroi avant (11) du couvercle (1), et une paroi arrière (22) alignée avec la paroi arrière (12) du couvercle (1), les parois avant (11) (21) du couvercle et la base définissant de multiples premières fentes (110) (210) pour servir d'orifice d'entrée d'air, les parois arrière (12) (22) du couvercle et de la base définissant de multiples secondes fentes (120) (220) pour servir d'orifice de sortie d'air, l'unité à compresseur incluant un moteur (6) possédant un arbre rotatif (60), dont une extrémité est pourvue d'un ventilateur de refroidissement (7), derrière les parois avant (11) (21), pour aspirer de l'air extérieur dans le boîtier pour former un courant d'air par l'intermédiaire des premières fentes (110) (210), le moteur (6) définissant deux ouvertures opposées (621) (622) et au moins un trou débouchant en aval (63) sur son logement (61) ; **caractérisé en ce que** le couvercle (1) est prévu, sur son panneau (10), de deux colonnes de fixation supérieures opposées (14) capables d'entrer en prise avec un organe de guidage d'écoulement d'air supérieur (3), alors que la base (2) est pourvue, sur son panneau (20), de deux colonnes de fixation inférieures opposées (24), correspondant aux deux colonnes de fixation supérieures (14), capables d'entrer en prise avec un organe de guidage d'écoulement d'air inférieur (4), moyennant quoi les organes de guidage d'écoulement d'air supérieur et inférieur (3) (4) supportent fermement le logement (61) du moteur de l'unité à compresseur, et en outre, le courant d'air généré par le ventilateur de refroidissement (7) peut être guidé par les organes de guidage d'écoulement d'air supérieur et inférieur (3) (4) pour rapidement entrer dans le logement (61) du moteur par l'intermédiaire des deux ouvertures opposées (621) (622) et pour sortir du logement (61) du moteur par l'intermédiaire du trou débouchant en aval (63), pour qu'il ne soit pas facile que de la chaleur s'accumule dans le moteur (6), et ainsi une puissance de sortie maximum du moteur (6) peut être obtenue, et les performances et la vie utile du moteur (6) peuvent être augmentées.

2. Gonfleur selon la revendication 1, dans lequel l'organe de guidage d'écoulement d'air supérieur (3) possède une paroi d'interception (31), deux parois latérales (35, 36) s'étendant à partir de deux côtés opposés de la paroi d'interception (31) de celui-ci vers la paroi avant (11) du couvercle (1), une plaque de base (32) formée entre une extrémité de la paroi d'interception (31) et les parois latérales (35, 36), et une portion incurvée (33) formée en face de la plaque de base (32), une surface inclinée supérieure (34) étant formée entre la paroi d'interception (31) et la plaque de base (32) de l'organe de guidage d'écoulement d'air supérieur (3) et tournée vers la paroi avant (11) du couvercle (1), l'organe de guidage d'écoulement d'air supérieur (3) étant capable d'entrer en prise avec les colonnes de fixation supérieures (14) de telle sorte que la plaque de base (32) de l'organe de guidage d'écoulement d'air supérieur (3) soit mise en contact avec le panneau (10) du couvercle (1), et un canal de guidage d'air supérieur (37) est défini entre la paroi d'interception (31), les deux parois latérales (35, 36) de l'organe de guidage d'écoulement d'air supérieur (3), et la plaque de base (32) de l'organe de guidage d'écoulement d'air supérieur (3) ; l'organe de guidage d'écoulement d'air inférieur (4) possède une paroi d'interception (41), deux parois latérales (45, 46) s'étendant à partir de deux côtés opposés de la paroi d'interception (41) de celui-ci vers la paroi avant (21) de la base (2), une plaque de base (42) formée entre une extrémité de la paroi d'interception (41) et les parois latérales (45, 46) de l'organe de guidage d'écoulement d'air inférieur (4), et une portion incurvée (43) formée en face de la plaque de base (42) de celui-ci, une surface inclinée inférieure (44) étant formée entre la paroi d'interception (41) et la plaque de base (42) de l'organe de guidage d'écoulement d'air inférieur (4) et tournée vers la paroi avant (21) de la base (2), l'organe de guidage d'écoulement d'air inférieur (4) étant capable d'entrer en prise avec les colonnes de fixation inférieures (24) de telle sorte que la plaque de base (42) de l'organe de guidage d'écoulement d'air inférieur (4) soit mise en contact avec le panneau (20) de la base (2), et un canal de guidage d'air inférieur (47) est défini entre la paroi d'interception (41), les deux parois latérales (45, 46) de l'organe de guidage d'écoulement d'air inférieur (4), et la plaque de base (42) de l'organe de guidage d'écoulement d'air inférieur (4) ; dans lequel les deux ouvertures (621) (622) du moteur (6) sont respectivement situées à l'intérieur des canaux de guidage d'air supérieur et inférieur (37) (47), moyennant quoi les canaux de guidage d'air supérieur et inférieur (37) (47) peuvent guider le courant d'air généré par le ventilateur de refroidissement (7) pour rapidement entrer dans le logement (61) du moteur par l'intermédiaire des deux ouvertures (621) (622), dans lequel les surfaces inclinées supérieure et inférieure (34) (44) des organes de guidage d'écoulement d'air supérieur et inférieur (3) (4) permettent au courant d'air de passer par les deux ouvertures (621) (622) plus facilement.

3. Gonfleur de la revendication 2, dans lequel chacune des deux colonnes de fixation supérieures (14) définit un canal (141), et l'organe de guidage d'écoulement d'air supérieur (3) est formé avec deux nervures opposées (30) capables de s'engager dans les canaux (141) des deux colonnes de fixation supérieures (14) et de supporter la portion incurvée (33) de l'organe de guidage d'écoulement d'air supérieur (3) pour permettre à l'organe de guidage d'écoulement d'air supérieur (3) d'être fixée sur le couvercle (1) ; chacune des deux colonnes de fixation inférieures (24) définit un canal (241), et l'organe de guidage d'écoulement d'air inférieur (4) est formé avec deux nervures opposées (40) capables de s'engager dans les canaux (241) des deux colonnes de fixation inférieures (24) et de supporter la portion incurvée (43) de l'organe de guidage d'écoulement d'air inférieur (4) pour permettre à l'organe de guidage d'écoulement d'air inférieur (4) d'être fixé sur la base (2) ; moyennant quoi le logement (61) du moteur peut être fermement supporté par les portions incurvées (33) (43) des organes de guidage d'écoulement d'air inférieur et supérieur (3) (4).

4. Gonfleur de la revendication 1, dans lequel le couvercle (1) est pourvu d'une paroi supérieure (13) qui possède un bas concave et est situé derrière et parallèlement à la paroi avant (11) du couvercle (1) ; la base (2) est pourvue d'une paroi inférieure (23) qui possède un haut concave et est située derrière et parallèlement à la paroi avant (21) de la base (2).

5. Gonfleur de la revendication 1, dans lequel les deux colonnes de fixation supérieures (14) sont agencées le long d'une ligne qui est parallèle à la paroi avant (11) du couvercle (1), l'organe de guidage d'écoulement d'air supérieur (3) étant en prise avec les deux colonnes de fixation supérieures (14) de telle sorte que la paroi d'interception (31) de l'organe de guidage d'écoulement d'air supérieur (3) soit plus éloignée par rapport à la paroi avant (11) du couvercle (1) que ses parois latérales adjacentes (35, 36) et soit orientée vers la paroi avant (11) du couvercle (1) ; les deux colonnes de fixation inférieures (24) sont agencées le long d'une ligne qui est parallèle à la paroi avant (21) de la base (2), l'organe de guidage d'écoulement d'air inférieur (4) étant en prise avec les deux colonnes de fixation inférieures (24) de telle sorte que la paroi d'interception (41) de l'organe de guidage d'écoulement d'air inférieur (4) soit plus éloignée par rapport à la paroi avant (21) de la base (2) que ses parois latérales adjacentes (45, 46) et soit orientée vers la paroi avant (21) de la base (2) ; moyennant quoi de l'air extérieur peut être aspiré dans le boîtier par l'intermédiaire des premières fentes (110) (210) et puis être guidé par les organes de guidage d'écoulement d'air supérieur et inférieur (3) (4) pour entrer dans le logement (61) du moteur par l'intermédiaire des deux ouvertures (621) (622), et pour finir peut sortir du boîtier par l'intermédiaire du secondes fentes (120) (220), ainsi emmenant la chaleur générée dans le moteur (6).

6. Gonfleur de la revendication 5, dans lequel la distance entre la ligne, le long de laquelle les deux colonnes de fixation supérieures (14) sont agencées, et la paroi avant (11) du couvercle (1) est A ; la distance entre l'une des deux ouvertures du moteur (6), qui correspond à l'organe de guidage d'écoulement d'air supérieur (3), et la paroi avant (11) du couvercle (1) est B ; la distance entre un arrière du ventilateur de refroidissement (7) et la paroi avant (11) du couvercle (1) est C ; dans lequel la relation B > A > C est respectée.
